# EUROPEAN PATENT SPECIFICATION

(11) **EP 3 812 198 B1**
(45) Date of publication and mention of the grant of the patent: **10.04.2024**
(21) Application number: 19204620.9
(22) Date of filing: 22.10.2019
(51) Int. Cl.: B60L 53/16, B60L 53/66, H01R 13/66

(54) **CHARGING CONNECTOR FOR CHARGING OF ELECTRIC VEHICLES**
LADESTECKER ZUM LADEN VON ELEKTRISCHEN FAHRZEUGEN
CONNECTEUR DE CHARGE POUR CHARGER DES VÉHICULES ÉLECTRIQUES

(43) Date of publication of application: 28.04.2021
(73) Proprietor: ABB E-mobility B.V., 2629 JG Delft (NL)
(72) Inventor: Voegeli, Andreas, 5330 Bad Zurzach (CH); Villanyi, Balazs, 2613 JW Delft (NL); Raaijmakers, Stefan, 2613 WN Delft (NL); Bech, Lars Peter, 3119 JA Schiedam (NL); Craciun, Octavian, 2566 CL The Hague (NL)
(74) Representative: Maiwald GmbH

(56) References cited:
- CN-A- 108 493 673
- DE-A1-102013 001 468
- DE-A1-102017 125 108
- JP-A- H05 276 675
- JP-A- 2017 225 286
- KR-A- 20170 054 764
- US-A1- 2018 215 280

## Description

### Technical Field

The invention relates to a charging connector for charging of electric vehicles, comprising a mating interface with electrical contacts for mating the charging connector with a corresponding socket of an electric vehicle, an electrical connection for galvanically connecting a charging cable the electrical contacts, and a handle for grabbing and handling the charging connector with a human hand. Further, the invention relates to methods of using such charging connectors.

### Background Art

In response to global warming and pollution challenges, the automotive industry is accelerating the development and commercialization of electric vehicles. This trend has a high visibility and acceptance among end-customers. The business of electric vehicle charging infrastructure (EVCI) is therefore growing rapidly as well and there is currently a compelling need to support the automotive industry while ensuring - above all- safety, but also efficiency and performance.

At present, the EVCI products rely on connectors provided by a number of suppliers. Depending on the ratings (which in turn determine the charging speed for a given battery), the connectors may require either non-cooled or cooled cable systems. The connectors available in the market are based on well-known technologies (i.e. electrical contact solutions, ca-bling, etc.), but the application is rather new. As a matter of fact, the EVCI connector technology is at an early stage, and the connectors offered by suppliers are still first or second generation designs. The field-experience with this kind of devices is limited. Reasonable feedback on design, functionality, implementation, and operating performance is becoming available to engineers and designers just now. The available standards for EVCI applications are also at an early stage, and are currently rather weak and/or incomplete. A drawback of prior art liquid cooled charging connectors is an insufficient thermal performance of the cooling system.

Recent field service activities have shed light on a number of issues with the products installed in the field. Those issues have a relevant impact on safety and reliability, and must be addressed properly in order to protect end-users and our business, as well.

One major issue is the resistance of charging arrangements to mechanical damage, especially with respect to damage to the handle of the charging connector when unintentionally dropped.

Conventional charging arrangements as, for example, known from DE 10 2013 019 882 A1 are not yet well suited to resist shocks due to dropping and, hence, have a high risk of crashing during use. In detail, DE 10 2013 019 882 A1 describes a charging cable connector including an electrically-connector connector unit, a receptacle housing enclosing at least some sections of the connector unit, a charging cable connector section and a strain relieving device. The receptacle housing is a multi-part design and further includes a housing base section of closed outer surface design and a connector aperture. The housing base section is configured to accommodate the connector unit. The connector unit is accessible via the connecting aperture, where the connecting aperture is formed as part of the housing base section. The charging cable connector section is provided apart from the connecting aperture and further includes a charging cable connecting aperture. The charging cable connector section is configured to accommodate a charring cable. The charging cable includes a strain-relieving device, where the charging cable is configured to be guide via the charging cable connecting aperture into the receptacle

Further, in DE 10 2013 106 448 A1 a similar design is shown. This document relates to an electrical plug connector, preferably for use in the field of electrical transportation. According to this document, an electrical plug connector for electrical connection to a mating electrical plug connector, having at least one electrical contact for contacting a mating electrical contact of the mating electrical plug connector, is provided, characterized in that a relief device is provided, which is designed and arranged in such a way that, in the connected state of the plug connector and the mating plug connector, the relief device produces a force, of which the main component acts vertically, between the front region of the plug connector and the front region of the mating plug connector. Thus, a plug connector for applications in electrical transportation shall be provided, which maintains the positioning in the charging socket even at high power/weight ratios.

In addition, DE 10 2016 105 371 A1 relates to a similar plug connector part for plug-in connection to a mating plug connector part, which plug connector part comprises a housing part, which is produced from a first material, at least one plugging element arranged on the housing part for bringing into electrical contact with the mating plug connector part, and additionally an attachment part, which is placed against the housing part and detachably connected to the housing part and has at least one plugging section having an opening, in which the at least one plugging element is arranged, and is produced from a second material different from the first material. In this way, a plug connector part shall be provided which has a simple design, is economical to produce, and additionally is protected against wear and improper handling.

DE 10 2017 108 526 A1 also describes a similar charging plug for a motor vehicle, comprising a connection module and a load contact module; the connection module can be connected to supply lines for supplying power, while the load contact module includes a load contact for transmitting a charging power, is removably secured to the connection module, and also includes a temperature sensor.

The charging connectors described above are typically made of plastic, and, as already mentioned above, suffer from the risk of cracking and damage if dropped, especially if repeatedly dropped. The same applies to the mating interface. Therefore, a vehicle charging connector is in its lifetime exposed to drop to ground events by user operation. An accumulation of such drop events might lead to a damage or cracking of the mechanical housing of the connector. As a consequence, for example, dust and moisture can enter the connector and may eventually cause a short circuit, followed by an electric arc. This might lead to fatalities. Another failure mode might be that larger parts of the connector housing are chipped off and, thus, life conductor parts might be exposed to user access. Hence, it is foreseeable that charging connectors will be dropped to the ground by users, which means that prevention of damages due to such events is hard to achieve.

Document US 2018 215 280 A1 relates to a charging control apparatus for an electric vehicle and a method of controlling it.

Document KR 2017 0054 764 A relates to an electric vehicle charging system which attaches an LED on a charging line so that the charging line can be easily identified when charging an electric vehicle.

Document DE 10 2013 001 468 A1 relates to a method for controlling a charging of an electric vehicle.

Document JP H05 276 675 A relates to a tension detector for detecting tension of a charging cable of a cable connector.

Document JP 2017 225 286 A relates to a determination reference about possibility of recycle in an on-vehicle battery to quickly shut off a high voltage circuit at shocking.

Document DE 10 2017 125 108 A1 relates to a charging plug for producing an electrical connection between a charging station and an electrical stored energy source of a vehicle.

Document CN 108 493 673 A relates to a charging gun with a safety early-warning function.

### Summary of invention

It is therefore an object of the invention to provide a charging connector for charging of electric vehicles which may prevent a user from being harmed due to damages of the charging connector which are caused by dropping the charging connector to the ground.

The object of the invention is solved by the features of the independent claims. Preferred embodiments are detailed in the dependent claims.

According to an aspect of the present invention, the problem is solved by a charging connector for charging of electric vehicles, comprising
a mating interface with electrical contacts for mating the charging connector with a corresponding socket of an electric vehicle,
an electrical connection for galvanically connecting a charging cable the electrical contacts, and
a handle for grabbing and handling the charging connector with a human hand,
characterized in that
the charging connector further comprises a motion sensor for detecting a motion of the charging connector, and
a signal processing unit, which is located outside of the charging connector, wherein the motion sensor is connected via a data line for routing a motion signal generated by the motion sensor to the signal processing unit,
the signal processing unit is configured for extracting patterns that identify that the charging connector is moved, which comprises identifying how the charging connector is moved, which comprises identifying a drive away event which relates to a movement of the charging connector in case it is plugged to a socket of an electric vehicle.

Hence, it is a key issue of the invention that the charging connector is equipped with a motion sensor which makes it possible to detect dynamics the charging connector is subjected to, especially when it is handled by a user of the charging connector. As set out in detail in the following, inter alia, these dynamics might be drop events and other events that can be of potential danger for a user of the charging connector. Therefore, the present invention relates to a charging connector which can be grabbed and handled by a human hand. In this respect, the charging connector is equipped with a handle for grabbing and handling the charging connector. This handle may be a separate unit of the charging connector. However, this handle may also be simply formed by the housing of the charging connector if this housing may be grabbed by a human hand.

In general, the motion sensor could be located on the outside of the charging connector. However, according to a preferred embodiment of the invention, the charging connector comprises a housing and the motion sensor is located inside the housing of the charging connector.

Further, the motion sensor may be designed as any kind of sensor which is capable of detecting a spatial shift of the charging connector. However, according to a preferred embodiment of the invention, the motion sensor is an acceleration sensor, preferably a 3D acceleration sensor. Physically, acceleration is a vector quantity having both direction and magnitude that is defined as the rate at which an object changes its velocity with respect to time. In order to measure such acceleration, an acceleration sensor (also called accelerometer) is used which, inter alia, is also referred to as shock sensor, G force sensor or gravity sensor. Such sensors are also capable of identifying their absolute spatial orientation, i.e. their orientation relative to the ground, and are available as small and resistant sensors which can easily be added to a charging connector for charging electric vehicles without taking up too much space.

The data generated by the motion sensor could be processed inside of the charging connector itself. However, according to a preferred embodiment of the invention, the motion sensor is connected to a data line for routing a motion signal generated by the motion sensor to a signal processing unit which is located outside of the charging connector. This provides for the possibility of using the motion signal in a centralized way and independently from the electric vehicle or the charging station the charging connector has been used for. In this respect, according to a preferred embodiment of the invention, the data line is fed through the mating interface and/or through the charging cable. This provides for the possibility that the signal processing unit is located in the electric vehicle and the data line is connected with the processing unit in the electric vehicle and/or that the signal processing unit is located in the charging station and the data line is connected with the processing unit in the charging station.

This processing unit or these processing units may be connected to a centralized unit which receives information on the motion of the charging connector from different units (electric vehicles/charging stations) which the charging connector has been connected to. This information on the motion of the charging connector may be provided with a unique identifier identifying the individual charging connector which makes it possible to associate this information with the respective charging connector.

The processing of the motion signal by the signal processing unit may be performed in different ways. According to a preferred embodiment of the invention, processing the motion signal by the signal processing unit is performed by extracting patterns that identify that the connector is moved. In this way, it may be identified whether the charging connector has been moved at all, e.g. for differentiating an idle state of the charging connector from a handling state in which the charging connector is handled and, thus, moved by a user.

Further, according to a preferred embodiment of the invention, the step of extracting patterns that identify that the connector is moved comprises the step of identifying how the connector is moved. This means that it is identified in which way the charging connector is moved, e.g. slowly, quickly, or whether the charging connector experiences a shock, i.e. a quick negative acceleration, for example due to dropping it to the ground. Hence, according to a preferred embodiment of the invention, the step of identifying how the connector is moved comprises the step of identifying a charging connector drop event.

Further, according to a preferred embodiment of the invention, the method comprises the following additional method steps: storing identified drop events, and outputting a message if the number of the drop events and/or the seriousness of a drop event exceeds a predefined maximum drop event number or a maximum drop event seriousness level, respectively. Outputting such a message may result in blocking the charging connector for further use or in a service personal to check, repair or exchange the charging connector. In this way, danger for users of the charging connector due to damages of the charging connector which are caused by dropping events may be prevented.

However, there are further scenarios the invention may be used for. According to another preferred embodiment of the invention, the step of identifying how the connector is moved comprises the step of identifying a drive away event which relates to a movement of the charging connector in case it is plugged to the socket of an electric vehicle. In this respect, the method may additionally comprise the following method steps: identifying whether the electrical contacts of the charging connector are in galvanic contact with contacts of a socket of a vehicle, and identifying a drive away event in the affirmative. In the affirmative, in addition, the method may comprise the step of outputting a drive away message. This message may result in warning the driver of the electric vehicle of stopping the electric vehicle.

In addition or in the alternative, according to preferred embodiments the following scenarios are also part of the invention:
Using the motion sensor, the plug-in behaviour and or the plug-out behaviour of the charging connector may be identified, i.e. the speed and/or the acceleration and/or the posture of the charging connector when it is plugged into a socket or plugged out of a socket as well as the time it takes to plug the charging connector into the socket and/or plug the charging connector out of the socket. In this respect, also the force which is need to plug and/or unplug the charging detector may be detected. Further, it may be identified whether the charging connector is subject to vibrations.

As set out above, in this way, the charging connector which is equipped with the motion sensor, preferably with an accelerometer, is able to provide useful information for preventing potential danger to users of the charging connector.

The charging connector according to the invention may be used as part of an electric vehicle supply equipment, EVSE, also referred to as electric vehicle, EV, charging station, electric recharging point, charging point, charge point, charge post or electronic charging station, ECS. The EVSE is an element in an infrastructure that supplies electric energy for recharging of electric vehicles, including electric cars, neighbourhood electric vehicles and plug-in hybrids. EVSEs usually comply with standards for electric vehicle fast charging, such as the so-called Combined Charging System, CCS, protocol according to IEC 61851-23 and SAE J1772 standard for charging electric vehicles both in the US and in the European Union, EU. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is controlled by the so called CharIN consortium. Besides other protocols such as, for example, CHAdeMO, as abbreviation of CHArge de Move, or GBIT, in particular according to 20234.3-2011 standard. The proposed solution can be advantageously used with even higher charging currents such as more than 500A or 600A and/or in combination with newer standards not yet defined requiring higher currents.

### Brief description of drawings

These and other aspects of the invention will be apparent from and elucidated with reference to the embodiments described hereinafter.

In the drawings:
- Fig. 1: schematically shows a charging connector for charging of electric vehicles according to a preferred embodiment of the invention,
- Fig. 2: schematically shows a charging connector for charging of electric vehicles according to another preferred embodiment of the invention,
- Fig. 3: schematically shows a system with a charging connector, an electric vehicle and a charging station according to still another preferred embodiment of the invention,
- Fig. 4: schematically shows a system with a charging connector, an electric vehicle and a charging station according to still another preferred embodiment of the invention, and
- Fig. 5: schematically shows a system with a charging connector, an electric vehicle and a charging station according to still another preferred embodiment of the invention.

### Description of embodiments

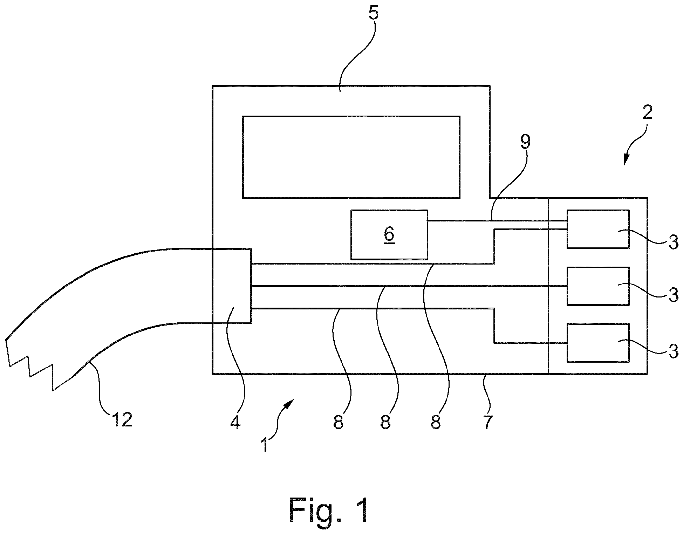

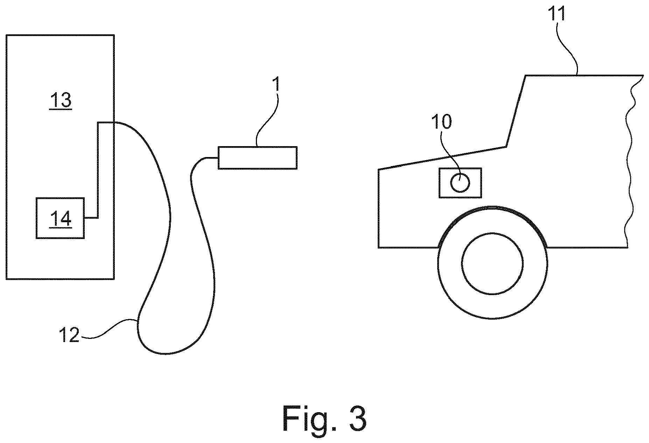

Fig. 1 schematically shows a charging connector 1 for charging an electric vehicle 11 examples o fwhich are schematically depicted in Figs. 3 to 5. The charging connector 1 comprises a housing 7, a mating interface 2 with electrical contacts 3 for mating the charging connector 1 with a corresponding socket 10 of the electric vehicle 11, an electrical connection 4 for galvanically connecting a charging cable 12 with the electrical contacts 3, and a handle 5 for grabbing and handling the charging connector 1 with a human hand. Inside the housing 7 of the charging connector 1 a motion sensor 6 for detecting a motion of the charging connector 1 is installed in a fixed and secured way. According to the present preferred embodiment of the invention, the motion sensor 6 is an accelerometer. With this motion sensor 6 it is possible to detect motions of the charging connector 1 and the posture of the charging connector 1, i.e. its relative position to the ground.

The electrical connection 4 is galvanically connected to the electrical contacts 3 of the mating interface 2 with the aid of electrical lines 8 which run inside the housing 7. In addition to that, one of the electrical contacts 3 of the mating interface 2 is connected to the motion sensor 6 with the aid of a data line 9. This data line 9 is used to transmit a motion signal generated by the motion sensor 6 to the respective electrical contact 3. In this way, the motion signal may be fed to a unit in the electric vehicle 11 which is charged with the aid of the charging connector 1 over a power line which is connected to the respective electrical contact 3. In this way, a separate line for transmitting the motion signal to a unit outside of the charging connector 1 for further processing may be avoided.

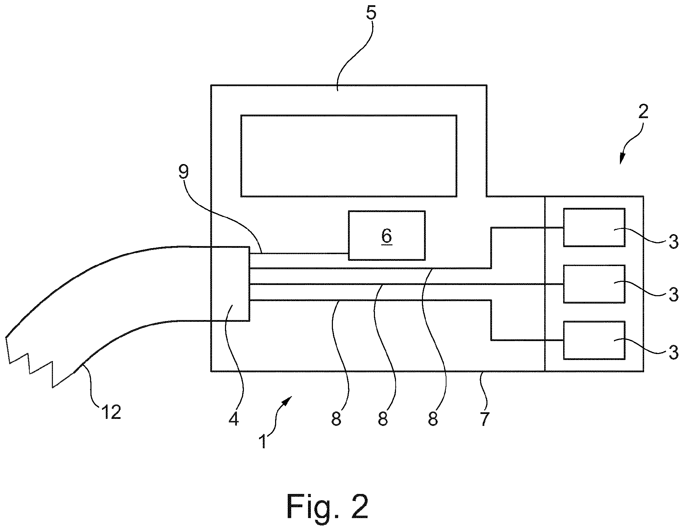

From Fig. 2, an alternative version of the charging connector 1 according to another preferred embodiment can be seen. Here, the data line 9 is not connected to an electrical contact 3 of the mating interface 2 but is fed into the charging cable 12. In this way, the motion signal may be transmitted to a charging station 13 (depicted in Figs. 3 to 5) with a line which is separate from the power lines of the charging cable 12. A system with such a charging connector 1, an electric vehicle 11 and a charging station 13 according to a preferred embodiment of the invention is schematically depicted in Fig. 3.

From Fig. 3 it can be seen that the charging station 13 comprises a processing unit 14. This processing unit 14 is adapted for processing the motion signal extracting patterns that identify that the charging connector 1 is moved. Here, it is not only identified that the step of extracting patterns that identify that the charging connector 1 is moved also comprises the step of identifying how the charging connector 1 is moved. In this respect, it is of special importance that the step of identifying how the charging connector 1 is moved comprises the step of identifying a charging connector drop event. For an example, such a drop event may be determined due to a negative acceleration which exceeds a predefined acceleration value.

According to the present preferred embodiment of the invention, the identified charging connector drop events are stored, and a message is output if the number of the charging connector drop events and/or the seriousness of a charging connector drop event exceeds a predefined maximum drop event number or a maximum charging connector drop event seriousness level, respectively. Outputting such a message may result in blocking the charging connector 1 for further use or in a service personal to check, repair or exchange the charging connector 1. In this way, danger for users of the charging connector 1 due to damages of the charging connector 1 which are caused by charging connector dropping events may be prevented.

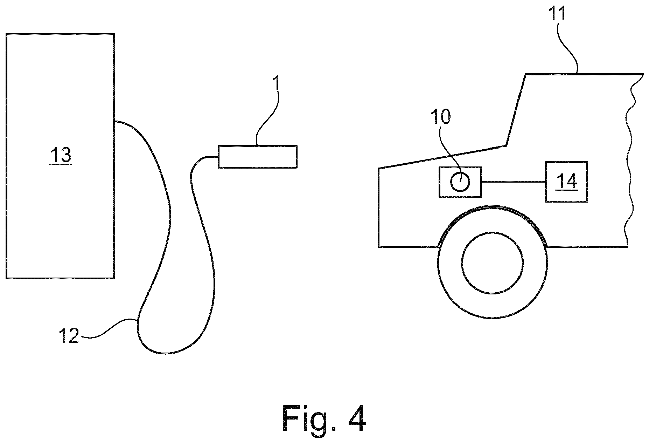

In Fig. 4, an alternative version of the system with a charging station 13, a charging connector 1 and an electric vehicle 11 according to another preferred embodiment can be seen. Here, a charging connector 1 which is shown in Fig. 1 is used, i.e. such a charging connector 1 which feeds the motion signal to an electrical contact 3 of the mating interface 2 which makes it possible to feed the motion signal to a processing unit 14 which is located in the electric vehicle 11 via the socket 10 the electric vehicle 11.

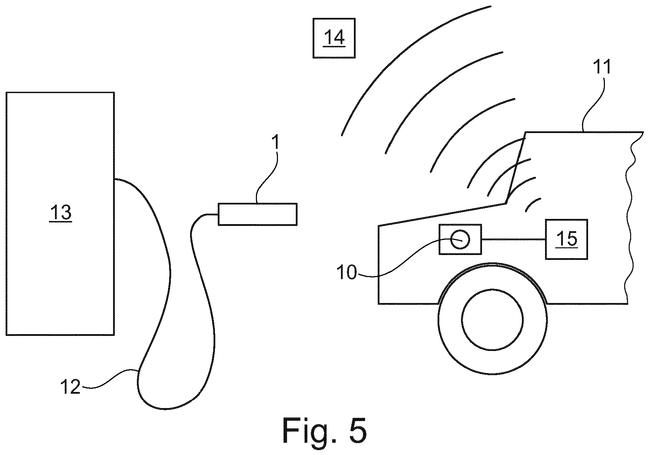

Instead of providing a processing unit 14 in the electric vehicle 11, as is schematically depicted in Fig. 5, the electric vehicle 11 may be provided with a transmitter 15 to which the motion signal is fed and which wirelessly transmits the motion signal to a processing unit 14 which may be located at a remote location. In this way, the processing unit 14 may act as a centralized unit which receives information on the motion of the charging connector 1 from different electric vehicles 11 which the charging connector 1 has been connected to. This information on the motion of the charging connector 1 may be provided with a unique identifier identifying the individual charging connector 1 which makes it possible to associate this information with the respective charging connector 1.

Hence, according to the invention that the charging connector 1 is equipped with a motion sensor 6 which makes it possible to detect dynamics the charging connector 1 is subjected to, especially when it is handled by a user of the charging connector 1. As set out in detail above, these dynamics might be charging connector drop events and other events that can be of potential danger for a user of the charging connector 1 which, with the aid of the present charging connector 1 can be avoided.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. The scope of the present invention is defined by the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope. Further, for the sake of clearness, not all elements in the drawings may have been supplied with reference signs.

### Reference signs list

- 1: charging connector
- 2: mating interface
- 3: electrical contacts
- 4: electrical connection
- 5: handle
- 6: motion sensor
- 7: housing
- 8: electrical lines
- 9: data line
- 10: socket
- 11: electric vehicle
- 12: charging cable
- 13: charging station
- 14: processing unit
- 15: transmitter

## Claims

1. A charging connector (1) for charging of electric vehicles (11), comprising
a mating interface (2) with electrical contacts (3) for mating the charging connector (1) with a corresponding socket (10) of an electric vehicle,
an electrical connection (4) for galvanically connecting a charging cable (12) the electrical contacts (3), and
a handle (5) for grabbing and handling the charging connector (1) with a human hand,
**characterized in that**
the charging connector (1) further comprises a motion sensor (6) for detecting a motion of the charging connector (1), and
a signal processing unit (14), which is located outside of the charging connector (1), wherein the motion sensor (6) is connected via a data line (9) for routing a motion signal generated by the motion sensor (6) to the signal processing unit (14),
the signal processing unit (14) being configured for extracting patterns that identify that the charging connector (1) is moved, which comprises identifying how the charging connector (1) is moved,
which comprises identifying a drive away event which relates to a movement of the charging connector (1) in case it is plugged to a socket (10) of an electric vehicle (11).

2. The charging connector (1) for charging of electric vehicles (11) according to claim 1, **characterized in that** the motion sensor (6) is an acceleration sensor, preferably a 3D acceleration sensor.

3. The charging connector (1) for charging of electric vehicles (11) according to claim 1, **characterized in that** the data line (9) is fed through the mating interface (2).

4. The charging connector (1) for charging of electric vehicles (11) according to claim 1, **characterized in that** the data line (9) is fed through the charging cable (12).

5. A system with a charging connector (1) according to claim 1 and an electric vehicle (11) or a charging station (13),
**characterized in that** the data line (9) is connected to a transmitter (15) which is arranged in the electric vehicle (11) or in the charging station (13), respectively, and which is adapted for wirelessly transmitting the motion signal to the processing unit (14),
wherein the signal processing unit (14) is configured for extracting patterns that identify that the charging connector (1) is moved, which comprises the step of identifying how the charging connector (1) is moved,
wherein identifying how the charging connector (1) is moved comprises identifying a drive away event which relates to a movement of the charging connector (1) in case it is plugged to a socket (10) of an electric vehicle (11).

6. The system with a charging connector (1) according to claim 5 and an electric vehicle (11) **characterized in that** the signal processing unit (14) is located in the electric vehicle (11) and the data line (9) is connected with the processing unit (14) in the electric vehicle (11).

7. The system with a charging connector (1) according to claim 5 and a charging station (13), **characterized in that** the signal processing unit (14) is located in the charging station (13) and the data line (9) is connected with the processing unit (14) in the charging station (13).

8. A method of using a charging connector (1) according to any of claims 1 to 4, **characterized by the following method step: processing the motion signal by** the signal processing unit (14), extracting patterns that identify that the charging connector (1) is moved, which comprises the step of identifying how the charging connector (1) is moved, and by identifying a drive away event which relates to a movement of the charging connector (1) in case it is plugged to a socket (10) of an electric vehicle (11).

9. The method according to claim 8, **characterized in that** identifying how the charging connector (1) is moved comprises the step of identifying a charging connector drop event.

10. The method according to claim 9, **characterized by:**
storing the identified charging connector drop events, and
outputting a message if the number of the charging connector drop events and/or the seriousness of a charging connector drop event exceeds a predefined maximum charging connector drop event number or a maximum charging connector drop event seriousness level, respectively.

11. The method according to claim 8, **characterized by:**
identifying whether the electrical contacts (3) of the charging connector (1) are in galvanic contact with the contacts of a socket (10)of a vehicle (11), and
identifying a drive away event in the affirmative.

12. The method according to claim 10, **characterized by the following method step:** outputting a drive away message.

## Patentansprüche

1. Ladestecker (1) zum Laden von Elektrofahrzeugen (11), aufweisend
eine Steckverbindung (2) mit elektrischen Kontakten (3) zum Verbinden des Ladesteckers (1) mit einer entsprechenden Steckdose (10) eines Elektrofahrzeugs,
einen elektrischen Anschluss (4) zur galvanischen Verbindung eines Ladekabels (12) mit den elektrischen Kontakten (3), und
einen Griff (5) zum Ergreifen und Handhaben des Ladesteckers (1) mit einer menschlichen Hand,
**dadurch gekennzeichnet, dass**
der Ladeverbinder (1) weiterhin einen Bewegungssensor (6) zum Erfassen einer Bewegung des Ladeverbinders (1) umfasst, und
eine Signalverarbeitungseinheit (14), die sich außerhalb des Ladesteckers (1) befindet, wobei der Bewegungssensor (6) über eine Datenleitung (9) zur Weiterleitung eines von dem Bewegungssensor (6) erzeugten Bewegungssignals an die Signalverarbeitungseinheit (14) angeschlossen ist,
wobei die Signalverarbeitungseinheit (14) zum Extrahieren von Mustern eingerichtet ist, die erkennen lassen, dass der Ladeverbinder (1) bewegt wird, was umfasst zu erkennen, wie der Ladeverbinder (1) bewegt wird,
was das Erkennen eines Wegfahr-Ereignisses umfasst, das sich auf eine Bewegung des Ladesteckers (1) bezieht, wenn er in eine Steckdose (10) eines Elektrofahrzeugs (11) eingesteckt ist.

2. Ladesteckvorrichtung (1) zum Laden von Elektrofahrzeugen (11) nach Anspruch 1, **dadurch gekennzeichnet, dass** der Bewegungssensor (6) ein Beschleunigungssensor, vorzugsweise ein 3D-Beschleunigungssensor, ist.

3. Ladesteckvorrichtung (1) zum Laden von Elektrofahrzeugen (11) nach Anspruch 1, **dadurch gekennzeichnet, dass** die Datenleitung (9) durch die Gegenschnittstelle (2) geführt ist.

4. Ladesteckvorrichtung (1) zum Laden von Elektrofahrzeugen (11) nach Anspruch 1, **dadurch gekennzeichnet, dass** die Datenleitung (9) durch das Ladekabel (12) geführt ist.

5. System mit einem Ladestecker (1) nach Anspruch 1 und einem Elektrofahrzeug (11) oder einer Ladestation (13),
**dadurch gekennzeichnet, dass** die Datenleitung (9) mit einem im Elektrofahrzeug (11) bzw. in der Ladestation (13) angeordneten Sender (15) verbunden ist, der zur drahtlosen Übertragung des Bewegungssignals an die Verarbeitungseinheit (14) eingerichtet ist,
wobei die Signalverarbeitungseinheit (14) dazu eingerichtet ist, Muster zu extrahieren, die erkennen lassen, dass der Ladestecker (1) bewegt wird, was den Schritt umfasst, zu erkennen, wie der Ladestecker (1) bewegt wird,
wobei das Erkennen, wie der Ladestecker (1) bewegt wird, das Erkennen eines Wegfahr-Ereignisses umfasst, das sich auf eine Bewegung des Ladesteckers (1) bezieht, wenn er in eine Steckdose (10) eines Elektrofahrzeugs (11) eingesteckt ist.

6. System mit einem Ladestecker (1) nach Anspruch 5 und einem Elektrofahrzeug (11), **dadurch gekennzeichnet, dass** die Signalverarbeitungseinheit (14) im Elektrofahrzeug (11) angeordnet ist und die Datenleitung (9) mit der Verarbeitungseinheit (14) in dem Elektrofahrzeug (11) verbunden ist.

7. System mit einem Ladestecker (1) nach Anspruch 5 und einer Ladestation (13), **dadurch gekennzeichnet, dass** die Signalverarbeitungseinheit (14) in der Ladestation (13) angeordnet ist und die Datenleitung (9) mit der Verarbeitungseinheit (14) in der Ladestation (13) verbunden ist.

8. Verfahren zur Verwendung eines Ladesteckers (1) nach einem der Ansprüche 1 bis 4, **gekennzeichnet durch** den folgenden Verfahrensschritt:
Verarbeiten des Bewegungssignals,
Extrahieren von Mustern, die erkennen lassen, dass der Ladestecker (1) bewegt wird, und
Erkennen eines Wegfahr-Ereignisses, das sich auf eine Bewegung des Ladesteckers (1) bezieht, wenn dieser in eine Steckdose (10) eines Elektrofahrzeugs (11) eingesteckt ist.

9. Verfahren nach Anspruch 8, **dadurch gekennzeichnet, dass** das Erkennen, wie der Ladestecker (1) bewegt wird, den Schritt des Erkennens eines Ladestecker-Falles umfasst.

10. Verfahren nach Anspruch 9, **gekennzeichnet durch:**
Speichern der identifizierten Ladeanschlussabbruchsereignisse, und
Ausgeben einer Nachricht, wenn die Anzahl der Ladesteckerausfallereignisse und/oder der Schweregrad eines Ladesteckerausfallereignisses eine vordefinierte maximale Anzahl von Ladesteckerausfallereignissen bzw. einen maximalen Schweregrad eines Ladesteckerausfallereignisses überschreitet.

11. Verfahren nach Anspruch 8, **gekennzeichnet durch:**
erkennen, ob die elektrischen Kontakte (3) des Ladesteckers (1) in galvanischem Kontakt mit den Kontakten einer Steckdose (10) eines Fahrzeugs (11) stehen, und
erkennen der Bejahung eines Wegfahrereignisses.

12. Verfahren nach Anspruch 10, **gekennzeichnet durch** das folgende Verfahren: Ausgeben einer Wegfahrnachricht.

## Revendications

1. Connecteur de charge (1) pour la charge de véhicules électriques (11), comprenant
une interface d'appariement (2) avec des contacts électriques (3) pour apparier le connecteur de charge (1) avec une prise (10) correspondante d'un véhicule électrique,
une connexion électrique (4) pour connecter galvaniquement un câble de charge (12) les contacts électriques (3), et
une poignée (5) pour saisir et manipuler le connecteur de charge (1) avec une main humaine,
**caractérisé en ce que**
le connecteur de charge (1) comprend en outre un capteur de mouvement (6) pour détecter un mouvement du connecteur de charge (1), et
une unité de traitement (14) de signal, qui est située en dehors du connecteur de charge (1), le capteur de mouvement (6) étant connecté via une ligne de données (9) pour acheminer un signal de mouvement généré par le capteur de mouvement (6) à l'unité de traitement (14) de signal,
l'unité de traitement (14) de signal étant configurée pour extraire des motifs qui identifient que le connecteur de charge (1) est bougé, ce qui comprend l'identification de la manière dont le connecteur de charge (1) est bougé,
ce qui comprend l'identification d'un événement d'éloignement lié à un mouvement du connecteur de charge (1) dans un cas où il est branché à une prise (10) d'un véhicule électrique (11).

2. Connecteur de charge (1) pour la charge de véhicules électriques (11) selon la revendication 1, **caractérisé en ce que** le capteur de mouvement (6) est un accéléromètre, de préférence un accéléromètre 3D.

3. Connecteur de charge (1) pour la charge de véhicules électriques (11) selon la revendication 1, **caractérisé en ce que** la ligne de données (9) est fournie via l'interface d'appariement (2).

4. Connecteur de charge (1) pour la charge de véhicules électriques (11) selon la revendication 1, **caractérisé en ce que** la ligne de données (9) est fournie via le câble de charge (12).

5. Système avec un connecteur de charge (1) selon la revendication 1 et un véhicule électrique (11) ou une station de charge (13),
**caractérisé en ce que** la ligne de données (9) est connectée à un émetteur (15) qui est agencé dans le véhicule électrique (11) ou dans la station de charge (13), respectivement, et qui est conçu pour émettre sans fil le signal de mouvement à l'unité de traitement (14), l'unité de traitement (14) de signal étant configurée pour extraire des motifs qui identifient que le connecteur de charge (1) est bougé, ce qui comprend l'étape d'identification de la manière dont le connecteur de charge (1) est bougé,
l'identification de la manière dont le connecteur de charge (1) est bougé comprenant l'identification d'un événement d'éloignement lié à un mouvement du connecteur de charge (1) dans un cas où il est branché à une prise (10) d'un véhicule électrique (11).

6. Système avec un connecteur de charge (1) selon la revendication 5 et un véhicule électrique (11) **caractérisé en ce que** l'unité de traitement (14) de signal est située dans le véhicule électrique (11) et la ligne de données (9) est connectée à l'unité de traitement (14) dans le véhicule électrique (11).

7. Système avec un connecteur de charge (1) selon la revendication 5 et une station de charge (13) **caractérisé en ce que** l'unité de traitement (14) de signal est située dans la station de charge (13) et la ligne de données (9) est connectée à l'unité de traitement (14) dans la station de charge (13).

8. Procédé d'utilisation d'un connecteur de charge (1) selon l'une quelconque des revendications 1 à 4, **caractérisé par** l'étape de procédé suivante : traitement du signal de mouvement par l'unité de traitement (14) de signal, extraction de motifs qui identifient que le connecteur de charge (1) est bougé, ce qui comprend l'étape d'identification de la manière dont le connecteur de charge (1) est bougé, et en identifiant un événement d'éloignement lié à un mouvement du connecteur de charge (1) dans un cas où il est branché à une prise (10) d'un véhicule électrique (11).

9. Procédé selon la revendication 8, **caractérisé en ce que** l'identification de la manière dont le connecteur de charge (1) est bougé comprend l'étape d'identification d'un événement de chute de connecteur de charge.

10. Procédé selon la revendication 9, **caractérisé par** :
le stockage des événements de chute de connecteur de charge identifiés, et
la fourniture d'un message si le nombre d'événements de chute de connecteur de charge et/ou la gravité d'un événement de chute de connecteur de charge dépasse(nt) un nombre d'événements de chute de connecteur de charge maximum prédéfini ou un niveau de gravité d'évènement de chute de connecteur de charge maximum, respectivement.

11. Procédé selon la revendication 8, **caractérisé par** :
l'identification si les contacts électriques (3) du connecteur de charge (1) sont en contact galvanique avec les contacts d'une prise (10) d'un véhicule (11), et
l'identification d'un événement d'éloignement le cas échéant.

12. Procédé selon la revendication 10, **caractérisé par** l'étape de procédé suivante : fourniture d'un message d'éloignement.
